# EUROPÄISCHE PATENTSCHRIFT

(11) **EP 3 702 532 B1**
(45) Veröffentlichungstag und Bekanntmachung des Hinweises auf die Patenterteilung: **22.03.2023**
(21) Anmeldenummer: 20157764.0
(22) Anmeldetag: 17.02.2020
(51) Int. Cl.: E01C 19/18, E01C 19/40, E01C 19/42, E01C 23/07, G01B 11/00, G01B 11/02, G01B 11/24

(54) **FERTIGER UND VERFAHREN ZUM BETREIBEN DESSEN**
PAVER AND METHOD FOR OPERATING IT
FINISSEUR ET SON PROCÉDÉ DE FONCTIONNEMENT

(30) Priorität: 26.02.2019 DE 102019104850
(43) Veröffentlichungstag der Anmeldung: 02.09.2020
(73) Patentinhaber: Wirtgen GmbH, 53578 Windhagen (DE)
(72) Erfinder: Brieskorn, Jens, 53115 Bonn (DE); Schwalbach, Lothar, 53567 Asbach (DE); Wagner, Dr., Stefan, 53604 Bad Honnef (DE); Walterscheid, Bernd, 53757 Sankt Augustin OT Buisdorf (DE); Ramseger, Gunnar, 57614 Borod (DE); Dahm, Martin, 57610 Gieleroth (DE)
(74) Vertreter: Oppermann, Frank

(56) Entgegenhaltungen:
- EP-A1- 3 260 603
- EP-A1- 3 406 799
- DE-A1-102011 101 944
- DE-U1- 9 204 614
- US-A1- 2008 153 402

## Beschreibung

Die Erfindung betrifft einen Fertiger, insbesondere Gleitschalungsfertiger, mit einem von Laufwerken getragenen Maschinenrahmen und einer Einbaueinrichtung zum Einbau von Material. Darüber hinaus betrifft die Erfindung ein Verfahren zum Betreiben eines derartigen Fertigers.

Für den Einbau von ungebundenen und gebundenen Schichten, beispielsweise Asphalt oder Beton, finden Fertiger Verwendung. Gleitschalungsfertiger, die über eine Gleitschalung verfügen, werden für den Einbau von Betondecken verwendet.

Die bekannten Gleitschalungsfertiger erlauben einen besonders wirtschaftlichen Betoneinbau. Der einzubauende Beton wird direkt vor dem Gleitschalungsfertiger abgelegt oder von der Seite über ein Förderband vor den Fertiger befördert. Zum gleichmäßigen Verteilen des Betons auf der gesamten Einbaubreite kann der Gleitschalungsfertiger über eine Verteilereinrichtung, beispielsweise ein Verteilerschwert oder eine Verteilerschnecke, verfügen. Nach dem Verteilen wird der Beton mit elektrischen oder hydraulischen Rüttlern homogen verdichtet. Die Gleitschalung formt die Betondecke während der Vorwärtsfahrt dann in einer definierten Breite und Dicke.

Gleitschalungsfertiger sind beispielsweise aus der DE 10 2011 101 944 A1, DE 10 2006 010 793 A1 und WO 2012/155904 A2 bekannt.

In der Praxis stellt sich das Problem eine für den Einbau ausreichende Menge an Material, beispielsweise Beton, quer zur Arbeitsrichtung des Fertigers gleichmäßig zu verteilen. Im Allgemeinen wird das Material mit einem Bagger von der Seite vor dem Fertiger abgeladen oder mit einem LKW geliefert und in Arbeitsrichtung vor dem Fertiger abgekippt. Dabei ist nicht zu vermeiden, dass sich einzelne Anhäufungen bilden, so dass das Material auf der gesamten Arbeitsbreite gleichmäßig verteilt werden muss. Obgleich das Verteilerschwert des Gleitschalungsfertigers das Material gleichmäßig verteilen kann, wird angestrebt, das Material bereits in einer möglichst gleichmäßigen Verteilung vor dem Fertiger quer zur Arbeitsrichtung abzulegen. Dies ist aber in der Praxis nicht ohne weiteres möglich, da der Bereich für den insbesondere für den Maschinenführer des Baggers, aber auch für den Fahrer des LKW nicht oder nur schlecht einsehbar ist. Im Übrigen muss immer ein ausreichendes Volumen an Material überhaupt vorhanden sein.

Die EP 3 406 799 A1 beschreibt einen Maschinenzug aus einer vorausfahrenden Straßenfräsmaschine 1 und einem nachfolgenden Straßenfertiger, der einen Maschinenrahmen aufweist, an dem ein Vorratsbehälter für einzubauendes Material und eine Einbaubohle 20 zum Einbau von Material angeordnet ist. Die Straßenfräsmaschine verfügt über eine Frästiefen-Regeleinrichtung zur Ansteuerung der Hubsäulen, die eine erste und zweite Messeinrichtung zum Messen des Abstandes zum nicht bearbeiteten Boden auf beiden Seiten der Fräswalze aufweist, um eine Frästiefenregelung durchführen zu können. Die Straßenfräsmaschine 1 verfügt weiterhin über eine Profildaten-Ermittlungseinrichtung, die während des Vorschubs der Fräsmaschine eine Folge von die Höhe des Profils an aufeinanderfolgenden Wegpunkten beschreibenden Höhenprofil-Daten ermittelt.

Die G 92 04 614 beschreibt eine Vorrichtung zur Bestimmung eines Oberflächenprofils insbesondere für eine den Belag einer Straße bearbeitenden Straßenbaumaschine. Die Straßenfräsmaschine weist eine fest mit der Fräswalze verbundene Halteeinrichtung auf, an der eine lineare Anordnung von Ultraschallsensoren angeordnet sind. Die Ultraschallsensoren erfassen das Oberflächenprofil der Straße quer zur Arbeitsrichtung der Straßenfräsmaschine. Bei der Straßenbaumaschine handelt es sich aber nicht um einen Fertiger, der sich nicht durch das Abtragen von Material mit einer Fräswalze, sondern durch den Einbau von Material mit einer Einbaueinrichtung auszeichnet.

Die US 2008/0153402 A1 beschreibt eine Straßenbaumaschine, die über eine Arbeitseinrichtung zum Abtragen von Material verfügt. Die Arbeitswalze trägt Schneiden zum Fräsen von längslaufenden Rillen. Zur Bestimmung der Schneidtiefe weist die Baumaschine nur an den Seiten der Arbeitswalze angeordnete Ultraschallsensoren auf.

Aus der EP 3 260 603 A1 ist eine Straßenfräsmaschine bekannt, die über eine Sensorik zur Bestimmung des Oberflächenprofils des abgefrästen Materials verfügt.

Der Erfindung liegt die Aufgabe zugrunde, einen Fertiger zu schaffen, der den Einbauprozess vereinfacht, insbesondere liegt der Erfindung die Aufgabe zugrunde, die Beschickung mit dem einzubauenden Material zu erleichtern. Eine Aufgabe der Erfindung ist auch die Verteilung des einzubauenden Materials auf der gesamten Arbeitsbreite zu verbessern.

Die Lösung dieser Aufgaben erfolgt erfindungsgemäß mit den Merkmalen der unabhängigen Ansprüche. Die Gegenstände der abhängigen Ansprüche betreffen vorteilhafte Ausführungsformen der Erfindung.

Die erfindungsgemäße Fertiger, insbesondere Gleitschalungsfertiger, verfügt über eine Vorfeld-Überwachungseinrichtung, die derart konfiguriert ist, dass Höhenprofil-Daten oder -Signale erzeugt werden, die das Höhenprofil des im Vorfeld der Einbaueinrichtung abgelegten Materials in einer quer zur Arbeitsrichtung verlaufenden Richtung beschreiben. Darüber hinaus weist der Fertiger eine die Höhenprofil-Daten oder -Signale empfangende Daten- oder Signalverarbeitungseinrichtung auf, die eine Verarbeitung der Höhenprofil-Daten oder -Signale erlaubt.

In diesem Zusammenhang werden unter Daten oder Signale sämtliche durch eine Messung gewonnenen Informationen verstanden, die das Höhenprofil beschreiben. Die Höhenprofil-Daten oder -Signale können analoge oder digitale Messwerte sein, die einer weiteren Auswertung zugrunde gelegt werden können.

Unter einer Daten- oder Signalverarbeitungseinrichtung wird eine Einrichtung verstanden, die eine Verarbeitung der mit der Vorfeld-Überwachungseinrichtung gewonnenen Daten oder Signale (Messwerte) erlaubt. Die Daten- oder Signalverarbeitungseinrichtung kann analoge oder digitale Schaltkreise umfassen und kann eine separate Einrichtung sein oder Bestandteil einer zentralen Rechen- und Steuereinrichtung des Fertigers sein. Die Daten- oder Signalverarbeitungseinrichtung kann beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen. Auf den Hardware-Komponenten kann ein Datenverarbeitungsprogramm (Software) laufen. Es ist auch eine Kombination der verschiedenen Komponenten möglich.

Das Höhenprofil beschreibt die Verteilung des Materials in einer quer zur Arbeitsrichtung verlaufenden Richtung. Unter einem Höhen-Profil kann in diesem Zusammenhang nicht nur ein quer zur Arbeitsrichtung verlaufender senkrechter Schnitt durch den oder die Materialanhäufungen im Vorfeld der Einbaueinrichtung verstanden werden, d.h. die seitliche Ausdehnung (Breite) der Materialhaufen, sondern die Höhenprofil-Daten oder - Signale können auch die Verteilung des Materials in Arbeitsrichtung beschreiben. Die Höhenprofil-Daten oder -Signale können daher ein Bild der Anhäufungen entlang einer querverlaufenden Linie oder eines Streifens oder das gesamte Volumen oder Teilvolumina der Anhäufungen beschreiben.

Das Höhenprofil kann in Bezug auf einen Referenzpunkt auf dem Fertiger, insbesondere relativ zur Oberkante der Betonmulde, ermittelt werden. Zur Ermittlung des Höhenprofils relativ zu dem Bezugspunkt kann die Vorfeld-Überwachungseinrichtung bzw. deren das Höhenprofil überwachende Sensorik in einer definierten Position am Maschinenrahmen angebracht werden. Alternativ kann das Höhenprofil relativ zum Untergrund ermittelt werden. Hierzu kann es notwendig sein, die Maschinenkonfiguration und die Ausrichtung des Fertigers relativ zum Untergrund, insbesondere die Stellungen der Hubsäulen oder Informationen von einem Nivellierungssystem, zu kennen. Diese Daten liegen üblicherweise in der Maschinensteuerung vor. Die Ermittlung des Höhenprofils relativ zum Untergrund hat den Vorteil, dass das tatsächlich vor dem Fertiger abgelegte Betonvolumen ermittelt werden kann.

Die Vorfeld-Überwachungseinrichtung stellt die Daten bereit, mit denen schon während der Beschickung eine gleichmäßigere Verteilung des Materials auf der Arbeitsbreite des Fertigers möglich ist und/oder die eine Ansteuerung der Verteilereinrichtung für eine verbesserte Verteilung des Materials nach der Beschickung des Fertigers erlauben.

Eine Ausführungsform der Erfindung sieht vor, dass die Daten- oder Signalverarbeitungseinrichtung derart konfiguriert ist, dass aus den Höhenprofil-Daten oder -Signalen Volumen-Daten bestimmt werden, die das Volumen des vor der Einbaueinrichtung abgelegten Materials beschreiben. Diese Volumen-Daten können dann in der Daten- oder Signalverarbeitungseinrichtung einer weiteren Daten- oder Signalverarbeitung unterzogen werden. Wenn das Volumen des abgelegten Materials bekannt ist, kann berechnet werden, wie lange das Volumen noch ausreicht. Wenn das Volumen nicht ausreichen sollte, kann die Vorschubgeschwindigkeit des Fertigers verringert oder der Fertiger gestoppt werden. Wenn das Volumen des Materials bekannt ist, das eingebaut werden soll, kann darüber hinaus der Materialbedarf ermittelt werden.

Eine besonders bevorzugte Ausführungsform sieht vor, dass die Daten- oder Signalverarbeitungseinrichtung derart konfiguriert ist, dass aus den Höhenprofil-Daten oder -Signalen und aus eine vorgegebene Soll-Höhe beschreibenden Daten Abschnitte des Höhenprofils ermittelt werden, in denen die Höhe des Materials gleich oder größer als die Soll-Höhe ist, und/oder Abschnitte des Höhenprofils ermittelt werden, in denen die Höhe des Materials kleiner als die Soll-Höhe ist. Auf diese Weise kann die Höhe einzelner Anhäufungen vor der Einbaueinrichtung bestimmt werden. Die die Soll-Höhe beschreibenden Daten geben daher Aufschluss darüber, in welchen Bereichen noch Material abgelegt werden muss und/oder in welche Bereiche Material transportiert werden muss.

Die die vorgegebene Soll-Höhe beschreibenden Daten können im einfachsten Fall nur einen einzigen Wert für die Soll-Höhe festlegen. Für die Entscheidung, ob die Höhe einer Materialanhäufung ausreichend ist oder nicht, können aber auch eine Mehrzahl von Höhenwerten festgelegt werden, um beispielsweise einen Mittelwert zu bilden, der die Höhe der Materialanhäufung in einem bestimmten Bereich angibt.

Die die Soll-Höhe beschreibenden Daten können Werte sein, die vorgeben werden können, oder automatisch bestimmt werden können, beispielsweise eine Soll-Höhe. Der Fertiger kann eine Eingabeeinrichtung aufweisen, mit der die Soll-Höhe manuell eingegeben werden kann. Die Soll-Höhe ist insbesondere von der Einbauhöhe, der Einbaubreite, der Einbaugeschwindigkeit und den Materialeigenschaften des einzubauenden Materials abhängig. Die Daten- oder Signalverarbeitungseinrichtung kann derart konfiguriert sein, dass auf der Grundlage der mit der Eingabeeinrichtung eingegebenen Einbauhöhe und/oder der Einbaubreite und/oder der Einbaugeschwindigkeit und/oder der Materialeigenschaften des einzubauenden Materials die die vorgegebene Soll-Höhe beschreibenden Daten automatisch bestimmt werden.

Der Fertiger weist vorzugsweise eine mit der Daten- oder Signalverarbeitungseinrichtung zusammenwirkende Anzeige- und/oder Signaleinrichtung auf, die derart konfiguriert ist, dass für das Höhenprofil charakteristische Symbole und/oder Signale angezeigt bzw. ausgegeben werden. Beispielsweise kann mit der Anzeige- und/oder Signaleinrichtung das Volumen des abgelegten Materials angezeigt werden. Die Anzeige- und/oder Signaleinrichtung kann auch ein (Alarm-)Signal ausgeben, beispielsweise ein optisches oder akustisches Alarmsignal, wenn das Volumen einen vorgegeben Wert, insbesondere das für den Einbau erforderliche Volumen, überschreitet oder unterschreitet.

Die Anzeige- und/oder Signaleinrichtung kann eine oder mehrere Anzeige- und/oder Signalelemente, beispielsweise Bildschirme, optische, akustische oder taktile Signalgeber, aufweisen. Die Anzeige- und/oder Signalelemente können am Maschinenrahmen des Fertigers und/oder auf einer tragbaren Einheit, insbesondere auf einem Tablet, oder auch an einem anderen Fertiger eines Verbundes von Fertigern vorgesehen sein. An dem Maschinenrahmen sollten die Anzeige- und/oder Signalelemente vorzugsweise im Sichtfeld des LKW-Fahrers gut sichtbar angebracht sein, d.h. die Oberfläche der Anzeige- und/oder Signalelemente sollte in einer quer zur Arbeitsrichtung verlaufenden Ebene liegen und in Arbeitsrichtung weisen.

Eine besonders bevorzugte Ausführungsform sieht vor, dass die Anzeige- und/oder Signaleinrichtung derart konfiguriert ist, dass für einen Abschnitt, in dem die Höhe des Materials kleiner als die Soll-Höhe ist, ein erstes Symbol und/oder Signal angezeigt bzw. ausgegeben wird, und für einen Abschnitt, in dem die Höhe des Materials größer als die Soll-Höhe ist, ein zweites Symbol und/oder Signal angezeigt bzw. ausgegeben wird. Diese Ausführungsform stellt dem Maschinenführer des Baggers oder dem LKW-Fahrer die Informationen zur Verfügung, die für eine möglichst gleichmäßige Beschickung erforderlich sind.

Ein anderer Aspekt der Erfindung liegt nicht in der Visualisierung des Beschickungsvorgangs, sondern in der Steuerung des Verteilungsvorgangs mittels der Vorfeld-Überwachungseinrichtung. Die Verteilung des Materials in einer quer zur Arbeitsrichtung verlaufenden Richtung erfolgt mit einer Verteilereinrichtung, die in Arbeitsrichtung vor der Einbaueinrichtung angeordnet ist.

Für die Steuerung des Verteilungsvorgangs weist der Fertiger eine mit der Daten- oder Signalverarbeitungseinrichtung zusammenwirkende Steuereinrichtung auf, die derart konfiguriert ist, dass die Verteilereinrichtung derart angesteuert wird, dass Material aus einem Abschnitt, in dem die Höhe des Materials größer als die Soll-Höhe ist, in einen Abschnitt, in dem die Höhe des Materials kleiner als die Soll-Höhe ist, transportiert wird, so dass das Material auf der gesamten Arbeitsbreite des Fertiges möglichst gleichmäßig verteilt wird. Der Steuerung können Algorithmen zugrunde liegen, die eine besonders schnelle und effiziente Verteilung des Materials ermöglichen. Die Verteilung des Materials kann dabei mit den bekannten Verteilereinrichtungen erfolgen.

Bei einer bevorzugten Ausführungsform erfolgt die automatische Verteilung des Materials mit einer Verteilereinrichtung, die ein quer zur Arbeitsrichtung bewegbares Verteilerelement aufweist, das auch als Verteilerschwert bezeichnet wird. Das Verteilerelement kann aus einer unteren Position in eine obere Position angehoben und aus einer oberen Position in eine untere Position abgesenkt werden, so dass eine Anhäufung von Material überfahren werden kann oder das Material zu der einen oder der anderen Seite geschoben werden kann. Die Verteilereinrichtung ist derart ausgebildet, dass die Position des Verteilerelementes beschreibende Positions-Daten erzeugt werden, die von der Steuereinrichtung ausgewertet werden können.

Die Daten- oder Signalverarbeitungseinrichtung ist derart konfiguriert, dass bestimmt wird, ob ein Abschnitt, in dem die Höhe des Materials größer als die Soll-Höhe ist, auf der linken oder rechten Seite eines Abschnitts liegt, in dem die Höhe des Materials kleiner als die Soll-Höhe ist. Die Ansteuerung des Verteilerelements erfolgt in Abhängigkeit davon, ob der Abschnitt, in dem die Höhe des Materials größer als die Soll-Höhe ist, auf der linken oder rechten Seite des Abschnitts liegt, in dem die Höhe des Materials kleiner als die Soll-Höhe ist, und in Abhängigkeit davon, ob sich das Verteilerelement auf der linken oder rechten Seite des Abschnitts befindet, in dem die Höhe des Materials größer als die Soll-Höhe ist. Auf der Grundlage der mit der Vorfeld-Überwachungseinrichtung gewonnen Höhenprofil-Daten oder -Signale und der Positionsdaten der Steuereinrichtung wird das Verteilerelement entweder absenkt oder angehoben und nach links oder rechts verfahren, um den Überschuss an Material erfassen und in den Bereich transportieren zu können, in dem ein Mangel an Material besteht.

Die Verteilung des Materials kann aber auch mit den bekannten Verteilerschnecken erfolgen. Wenn die Verteilereinrichtung mehrere Verteilerschnecken, beispielsweise eine linke und eine rechte Verteilerschnecke aufweist, kann die eine oder andere Verteilerschnecke in Abhängigkeit von der Verteilung des Materials entsprechend angesteuert werden, um das Material auf der gesamten Arbeitsbreite gleichmäßig zu verteilen.

Die Vorfeld-Überwachungseinrichtung weist vorzugsweise ein Abstandsmesssystem auf, das derart konfiguriert sind, dass der Abstand mindestens eines auf den Maschinenrahmen bezogenen Referenzpunktes zu der Oberfläche des Materials gemessen wird.

Bei einer Ausführungsform weist das Abstandsmesssystem der Vorfeld-Überwachungseinrichtung mehrere quer zur Arbeitsrichtung verteilt angeordnete Abstandssensoren, insbesondere Lasersensoren, Ultraschallsensoren, induktive oder kapazitive Abstandssensoren, die jeweils einem bestimmten Abschnitt des Höhenprofils zugeordnet sind. Folglich ist die gesamte Arbeitsbreite des Fertigers in mehrere Abschnitte unterteilt, die jeweils mit einem oder mehreren Abstandssensoren überwacht werden.

Die Abstandssensoren sind derart ausgebildet, dass der Abstand eines auf den Maschinenrahmen bezogenen Referenzpunktes zu der Oberfläche des Materials gemessen wird, das sich in dem Abschnitt befindet, dem der Abstandsensor zugeordnet ist. Mit jedem Abstandssensor kann eine Punktmessung oder eine Messung in Bezug auf einen bestimmten Bereich der Oberfläche des aufgehäuften Materials erfolgen. Das Abstandsmesssystem kann aber auch über nur einen Abstandssensor verfügen.

Anstelle oder zusätzlich zu einem oder mehreren konventionellen Abstandssensoren kann die Vermessung auch mit einem Abstandsmesssystem erfolgen, das ein oder mehrere Kamera-Systeme aufweist, wobei das Kamera-System derart ausgebildet ist, dass die Entfernung für einzelne Bildpunkte in dem aufgenommenen Bild berechnet wird. Derartige Kamera-Systeme, die zum Stand der Technik gehören, messen Distanzen mit einem Laufzeitverfahren. Das Vorfeld wird mittels Lichtpulsen ausgeleuchtet und für die Bildpunkte wird die Zeit gemessen, die das Licht braucht, um wieder zu der Kamera zurückzukehren. Aus den Laufzeiten werden dann die Entfernungen berechnet. Die Höhenprofil-Daten oder -Signale beschreiben bei dieser Ausführungsform also ein dreidimensionales Bild der Materialanhäufungen und erlauben die Vermessung derselben, so dass deren Volumen und/oder Verteilung bestimmt werden kann. Diese Kamera-Systeme werden als TOF-Kameras (englisch: *time of flight*) bezeichnet. Das Abstandsmesssystem kann ein oder mehrere zumindest einen Teil des Vorfelds der Verteilereinrichtung aufnehmende TOF-Kameras aufweisen.

Grundsätzlich können beliebige Techniken zur Ermittlung von Entfernungen bzw. Abständen Verwendung finden, so z. B. auch 3D- oder Stereo-Kameras.

Die Vorfeld-Überwachungseinrichtung mit dem Abstandsmesssystem kann eine bauliche Einheit bilden. Beispielsweise können die Abstandssensoren oder Kamera-Systeme an einem Rahmen angebracht sein, der in Arbeitsrichtung vor der Verteilereinrichtung angeordnet ist. Eine Ausführungsform sieht vor, dass die Vorfeld-

Überwachungseinrichtung mehrere modulare Einheiten umfasst, die jeweils einen Abstandssensor oder mehrere quer zur Arbeitsrichtung verteilt angeordnete Abstandssensoren oder jeweils ein Kamera-System oder mehrere quer zur Arbeitsrichtung verteilt angeordnete Kamera-Systeme aufweisen. Mit einem derartigen modularen Aufbau der Vorfeld-Überwachungseinrichtung ist eine Anpassung an die unterschiedlichen Arbeitsbreiten der Fertiger möglich, wobei die Anzahl der verwendeten Module durch die Arbeitsbreite des Fertigers bestimmt wird.

Zusätzlich kann mit der Vorfeld-Überwachungseinrichtung auch eine Dokumentation des Einbauprozesses, beispielsweise des Volumens des eingebauten Betons, erfolgen. Dies ist insofern von Bedeutung, als sich das Volumen des vor dem Fertiger abgelegten Betons von dem Volumen des fertig eingebauten Betons unterscheidet, da der Beton während des Einbaus verdichtet wird. Somit kann beispielsweise auf einen Verdichtungsgrad geschlossen werden und/oder eine Prognose des für zukünftige Bauabschnitte benötigten Betonbedarfs erfolgen.

Eine Ausführungsform des erfindungsgemäßen Fertigers sieht vor, dass die Anzeige- und/oder Signaleinrichtung an dem Maschinenrahmen vorgesehene Anzeige- und/oder Signalelemente und/oder auf einer tragbaren Einheit vorgesehene Anzeige- und/oder Signalelemente aufweist.

Eine weitere Ausführungsform des erfindungsgemäßen Fertiger sieht vor, dass die Anzeige- und/oder Signaleinrichtung derart konfiguriert ist, dass für einen Abschnitt (11, III), in dem die Höhe des Materials (M) kleiner als die Soll-Höhe (H_{SOLL}) ist, ein erstes Symbol und/oder Signal angezeigt bzw. ausgegeben wird, und für einen Abschnitt (1), in dem die Höhe des Materials (M) größer als die Soll-Höhe (H_{SOLL}) ist, ein zweites Symbol und/oder Signal angezeigt bzw. ausgegeben wird.

Eine weitere Ausführungsform des erfindungsgemäßen Fertiger sieht vor, dass das Abstandsmesssystem einen Abstandssensor, insbesondere Lasersensor, Ultraschallsensor, induktiver oder kapazitiver Abstandssensor, oder mehrere quer zur Arbeitsrichtung (X) verteilt angeordnete Abstandssensoren, insbesondere Lasersensoren, Ultraschallsensoren, induktive oder kapazitive Abstandssensoren, aufweist, die jeweils einem bestimmten Abschnitt (I, II, III) des Höhenprofils zugeordnet sind, wobei die Abstandssensoren derart konfiguriert sind, dass der Abstand eines auf den Maschinenrahmen bezogenen Referenzpunktes zu der Oberfläche des Materials (M) gemessen wird, das sich in dem Abschnitt befindet, dem der Abstandsensor zugeordnet ist.

Eine weitere Ausführungsform des erfindungsgemäßen Fertiger sieht vor, dass das Abstandsmesssystem ein Kamera-System oder mehrere zumindest ein Teil des Vorfelds der Verteilereinrichtung aufnehmende Kamera-Systeme aufweist, wobei das Kamera-System derart konfiguriert ist oder die Kamerasysteme derart konfiguriert sind, dass die Entfernung für einzelne Bildpunkte in dem aufgenommenen Bild berechnet wird.

Mit der Daten- oder Signalverarbeitungseinrichtung kann aus den Höheprofil-Daten oder - Signalen das Volumen des vor der Verteilereinrichtung abgelegten Materials (M) beschreibende Volumen-Daten bestimmt werden.

Für das Höhenprofil charakteristische Symbole und/oder Signale können mit einer Anzeige- und/oder Signaleinrichtung angezeigt bzw. ausgegeben werden.

Für einen Abschnitt (II), in dem die Höhe des Materials (M) kleiner als die Soll-Höhe (H_{SOLL}) ist, kann ein erstes Symbol und/oder Signal angezeigt bzw. ausgegeben wird, und für einen Abschnitt (1), in dem die Höhe des Materials größer als die Soll-Höhe (H_{SOLL}) ist, kann ein zweites Symbol und/oder Signal angezeigt bzw. ausgegeben wird.

Im Folgenden wird ein Ausführungsbeispiel der Erfindung unter Bezugnahme auf die Zeichnungen im Einzelnen beschrieben.

Es zeigen:
- Fig. 1: eine stark vereinfachte schematische Darstellung eines Gleitschalungsfertigers in der Seitenansicht,
- Fig. 2: eine Ansicht des Gleitschalungsfertigers aus der Richtung des Pfeils II von Fig. 1,
- Fig. 3: ein Blockschaltbild mit den Kamera-Systemen und der Daten- oder Signalverarbeitungseinrichtung und der Anzeigeeinrichtung sowie der Eingabeeinrichtung und der Steuereinrichtung der Verteilereinrichtung,
- Fig. 4: ein Ablaufdiagramm zur Veranschaulichung der Ansteuerung der Antriebseinrichtung der Verteilereinrichtung,
- Fig. 5A und Fig. 5B: schematische Darstellungen der Materialanhäufungen zur Veranschaulichung der einzelnen Verfahrensschritte von Fig. 4,
- Fig. 6: eine aus mehreren modularen Einheiten bestehende Vorfeld-Überwachungseinrichtung, und
- Fig. 7: einen Einbauzug in stark vereinfachter schematischer Darstellung.

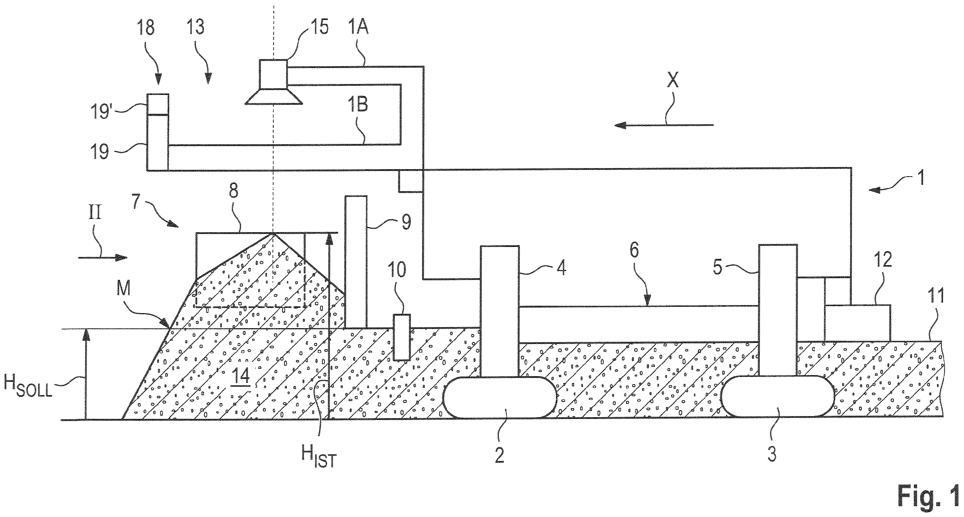

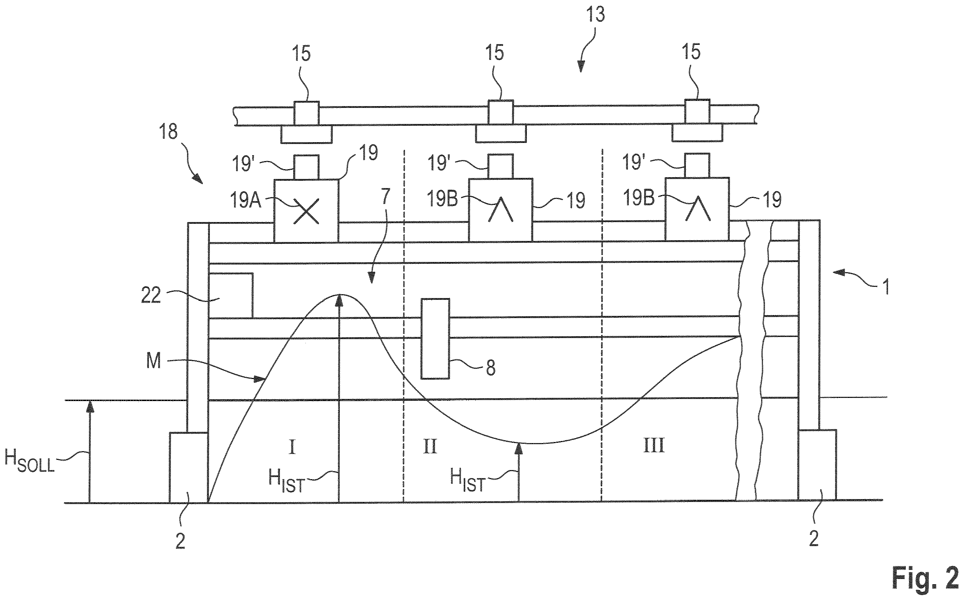

Fig. 1 zeigt die Seitenansicht und Fig. 2 die Vorderansicht eines Gleitschalungsfertiger als Beispiel für einen Fertiger in stark vereinfachter schematischer Darstellung, wobei nur die für die Erfindung wesentlichen Baugruppen gezeigt sind. Der Gleitschalungsfertiger weist einen Maschinenrahmen 1 auf, der von zwei höhenverstellbaren in Arbeitsrichtung vorderen Laufwerken 2 und zwei höhenverstellbaren hinteren Laufwerken 3 getragen wird. Die vorderen und hinteren Laufwerke 2, 3 sind an dem Maschinenrahmen 1 mittels in Arbeitsrichtung X vorderen und hinteren Hubsäulen 4, 5 befestigt, so dass der Maschinenrahmen 1 angehoben oder abgesenkt werden kann. Zwischen den Laufwerken 2, 3 befindet sich eine nur andeutungsweise dargestellte Arbeitseinrichtung in Form einer Gleitschalung 6, die an dem Maschinenrahmen angeordnet ist.

Das einzubauende Material M (Beton) wird in Arbeitsrichtung X vor dem Gleitschalungsfertiger abgelegt. Beim Ablegen des Materials bilden sich in der Praxis mehrere auf der Arbeitsbreite verteilt angeordnete Anhäufungen von Beton. Fig. 1 zeigt einen Schnitt durch einen Materialhaufen.

Der Gleitschalungsfertiger verfügt über eine Verteilereinrichtung 7, die ein quer zur Arbeitsrichtung bewegbares Verteilerelement 8 aufweist, um den Beton auf der gesamten Arbeitsbreite gleichmäßig zu verteilen. Zur Einstellung der Höhe des einzubauenden Betons weist der Gleitschalungsfertiger ein sich quer zur Arbeitsrichtung erstreckendes Abstreifelement 9 auf. In Arbeitsrichtung X hinter dem Abstreifelement 9 befinden sich Rüttler 10 zum Verdichten des Betons.

Fig. 1 zeigt die Oberfläche des Betons in Arbeitsrichtung X vor und hinter dem Abstreifelement 9 sowie die Oberfläche der Betonbahn 11 hinter der Gleitschalung 6. Die Oberfläche des Betons wird mit einer Glätteinrichtung 12 bearbeitet, die hinter der Gleitschalung 6 angeordnet ist.

Der Gleitschalungsfertiger verfügt über eine Vorfeld-Überwachungseinrichtung 13 zur Überwachung des Bereichs des Geländes 14 (Vorfeld), auf dem das einzubauende Material (Beton) abgelegt wird. Die Vorfeld-Überwachungseinrichtung 13 umfasst ein Abstandsmesssystem, das eine Mehrzahl von Abstandssensoren oder Kamera-Systeme 15 aufweist, die quer zur Arbeitsrichtung X des Gleitschalungsfertigers, vorzugsweise in gleichbleibenden Abständen, verteilt angeordnet sind. Bei dem vorliegenden Ausführungsbeispiel weist der Gleitschalungsfertiger auf der gesamten Arbeitsbreite insgesamt sechs Abstandssensoren oder Kamera-Systeme 15 auf. Fig. 2 zeigt in einer schematischen Darstellung aber nur drei Abstandssensoren oder Kamera-Systeme 15. Die Anzahl der Abstandssensoren oder Kamera-Systeme 15 wird von dem Erfassungsbereich der Sensoren bzw. Systeme und der vorzugsweise verstellbaren Arbeitsbreite des Gleitschalungsfertigers bestimmt. Beispielsweise können auch nur zwei oder drei Abstandssensoren oder Kamera-Systeme 15 vorgesehen sein. Die Überwachung des Vorfeldes 14 des Gleitschalungsfertigers ist aber auch mit nur einem Kamera-System möglich. Die Abstandssensoren messen den Abstand von einem auf den Maschinenrahmen 1 bezogenen Referenzpunkt zu der Oberfläche des Materials M. Aus der vorgegebenen Einbauhöhe bzw. den Hubstellungen der Hubsäulen kann die Höhe des auf den Maschinenrahmen 1 bezogenen Referenzpunktes gegenüber der Oberfläche des Geländes bestimmt werden, wobei aus der Höhe des Referenzpunktes wiederum die Höhe H_{IST} des Materials M in Bezug auf den Boden berechnet werden kann.

Bei dem vorliegenden Ausführungsbeispiel weist das Abstandsmesssystem der Vorfeld-Überwachungseinrichtung 13 mehrere TOF-Kamera-Systeme 15 auf, die an einem Ausleger 1A des Maschinenrahmens 1 befestigt sind. Die Kamera-Systeme 15 verfügen jeweils über eine nicht dargestellte Beleuchtungseinheit zur Beleuchtung des Vorfeldes 14, eine Optik zum Sammeln des von der Umgebung reflektierten Lichts und einen TOF-Sensor, der die Laufzeit für jeden Bildpunkt misst, sowie ein Interface zur Ausgabe von Daten. TOF-Kamera-Systeme gehören zum Stand der Technik.

Darüber hinaus weist die Vorfeld-Überwachungseinrichtung 13 eine Daten- oder Signalverarbeitungseinrichtung 16 auf. Bei dem vorliegenden Ausführungsbeispiel ist eine Datenverarbeitungseinrichtung 16 zur Verarbeitung der Daten der TOF-Kamera-Systeme 15 vorgesehen. Die Datenverarbeitungseinrichtung 16 ist derart konfiguriert, dass aus den Daten, die aus den TOF-Kamera-Systemen 15 ausgelesenen werden, Höhenprofil-Daten erzeugt werden, die das Höhenprofil des im Vorfeld der Verteilereinrichtung 7 abgelegten Materials M in einer quer zur Arbeitsrichtung X verlaufenden Richtung beschreiben.

Die TOF-Kamera-Systeme 15 sind bestimmten Abschnitten zugeordnet, in denen die Höhe des abgelegten Materials überwacht wird. Bei dem vorliegenden Ausführungsbeispiel ist die Arbeitsbreite in sechs Abschnitte unterteilt, wobei in Fig. 2 nur drei Abschnitte 1, 11, 111 dargestellt sind. Die Datenverarbeitungseinrichtung 16 bestimmt aus den Daten der TOF-Kamera-Systeme die Höhe H des angehäuften Materials in den einzelnen Abschnitten. Einem Abschnitt können auch mehrere Kamera-Systeme 15 oder Abstandssensoren zugeordnet werden. Der Auswertung der Daten können die bekannten Algorithmen zugrunde liegen. Beispielsweise kann aus den Daten der einem Abschnitt zugeordneten Kamera-Systeme oder Abstandssensoren ein Mittelwert gebildet werden.

Bei dem vorliegenden Ausführungsbeispiel bestimmt die Datenverarbeitungseinrichtung 16 für jeden der sechs Abschnitte einen Wert für die Höhe H, beispielsweise die maximale Höhe, des in dem jeweiligen Abschnitt befindlichen Materials. Diese Werte werden in einem Speicher 16A der Datenverarbeitungseinrichtung 16 gespeichert.

Die Vorfeld-Überwachungseinrichtung 13 weist weiterhin eine Eingabeeinrichtung 17, beispielsweise eine Tastatur 17A oder einen Touch-Screen auf. Mit der Eingabeeinrichtung 17 kann von dem Maschinenführer des Gleitschalungsfertigers eine Soll-Höhe H_{SOLL} manuell eingegeben werden, die in dem Speicher 16A der Datenverarbeitungseinrichtung 16 gespeichert wird.

Die Datenverarbeitungseinrichtung 16 ist derart konfiguriert, dass die den einzelnen Abschnitten zugeordneten Höhenwerte H_{IST} mit einer Soll-Höhe H_{SOLL} verglichen werden. Wenn die Höhe des Materials kleiner als die Soll-Höhe ist, wird in dem betreffenden Abschnitt auf eine nicht ausreichende Materialmenge geschlossen, und wenn die Höhe des Materials gleich oder größer als die Soll-Höhe ist, wird auf eine ausreichende Materialmenge geschlossen. In Fig. 1 oder Fig. 2 sind die vorgegebene Soll-Höhe H_{SOLL} und die Ist-Höhe H_{IST} des Materials M gekennzeichnet.

Darüber hinaus verfügt die Vorfeld-Überwachungseinrichtung 13 über eine Anzeige- oder Signaleinrichtung 18, die eine der Anzahl der Abschnitte entsprechende Anzahl von Anzeige- oder Signalelementen 19 aufweist. Bei dem vorliegenden Ausführungsbeispiel sind sechs Anzeigeelemente 19 vorgesehen, die bei dem vorliegenden Ausführungsbeispiel Anzeigetafeln sind, die an einem Ausleger 1B des Maschinenrahmens 1 befestigt sind.

Die Anzeige- oder Signalelemente19 sind im Sichtfeld des Fahrers des LKW`s, der das Material im Vorfeld des Gleitschalungsfertigers abkippt, quer zur Arbeitsrichtung X verteilt angeordnet. Die Anzeige- oder Signalelemente19 können an Teilen des Maschinenrahmens 1 befestigt sein.

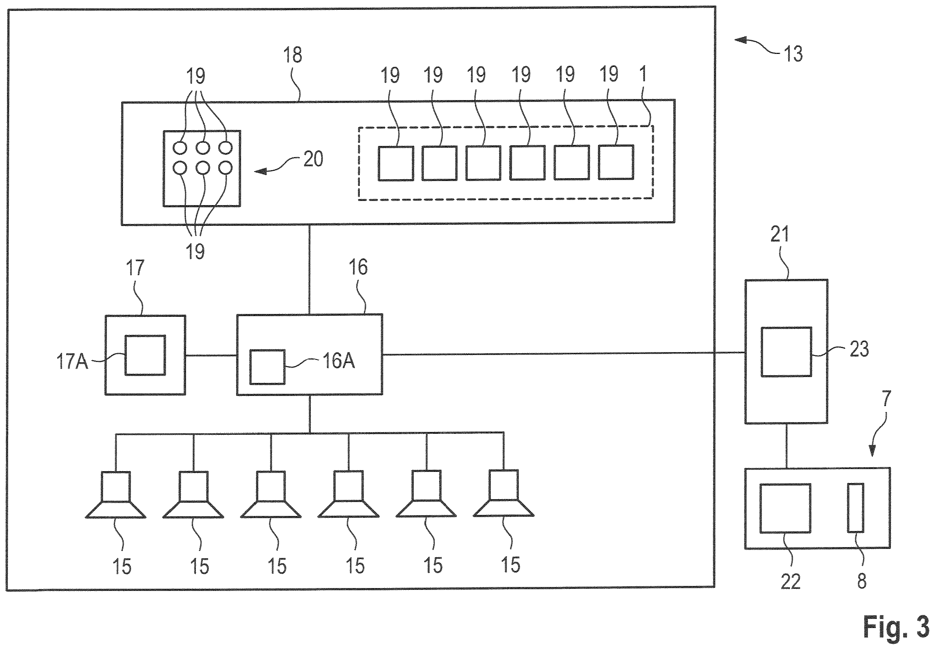

Die Anzeige- oder Signaleinrichtung 18 kann aber auch über Anzeige- oder Signalelemente 19 verfügen, die nicht an dem Gleitschalungsfertiger vorgesehen sind. Die Anzeigeelemente oder Signalelemente können auch an einer tragbaren Anzeige- oder Signaleinheit 20 vorgesehen sein. Bei dem vorliegenden Ausführungsbeispiel ist eine zusätzliche Anzeige- oder Signaleinheit 20 in Form eines Tablets vorgesehen, auf dessen Bildschirm die Anzeigeelemente 19 dargestellt werden, und das über ein Signalelement 19, beispielsweise einen Lautsprecher, verfügen kann (Fig. 3).

Die tragbare Anzeigeeinheit 20 kommuniziert mit der Datenverarbeitungseinrichtung 16 über eine drahtgebundene oder drahtlose Verbindung, beispielsweise über ein WLAN oder eine Datenübertragung nach dem Bluetooth-Standard. Die tragbare Anzeigeeinheit 20 kann auch die Anzeigetafeln an dem Gleitschalungsfertiger ersetzen.

Die Anzeige- oder Signaleinrichtung 18 zeigt für einen Abschnitt X in dem die Höhe H_{IST} des Materials größer oder gleich als die Soll-Höhe H_{SOLL} ist, ein erstes Symbol 19A, beispielsweise ein Kreuz, und für einen Abschnitt II, III, in dem die Höhe des Materials kleiner als die Soll-Höhe ist, ein zweites Symbol 19B, beispielsweise einen nach oben weisenden Pfeil, an. Die Symbole 19A, 19B können eine bestimmte Farbe haben. Das Kreuz kann beispielsweise mit einem Array von grünen Leuchtdioden und der Pfeil mit einem Array von roten Leuchtdioden dargestellt werden. Der rote Pfeil signalisiert dem Fahrer des LKW, dass in dem betreffenden Abschnitt noch weiteres Material abzukippen ist. Das grüne Kreuz signalisiert, dass ausreichend Material in dem Abschnitt vorhanden ist. Dadurch wird die Beschickung des Gleitschalungsfertigers erleichtert.

Eine Ausführungsform sieht vor, dass mit der Anzeige- oder Signaleinrichtung 18 nicht nur angezeigt bzw. signalisiert wird, ob sich in dem betreffenden Abschnitt ausreichend Material befindet, sondern die Höhe des Materials, beispielsweise die Höhe in cm, angezeigt wird. Auch kann berechnet und angezeigt werden, um welchen Wert die Soll-Höhe H_{SOLL} unterschritten und/oder überschritten ist. Bei diesen Ausführungsbeispielen sind zusätzliche alphanumerische Anzeigeelemente 19' vorgesehen. Es kann aber auch nur eine alphanumerische Anzeige der Materialhöhen erfolgen.

Die TOF-Kamera-Systeme 15 erlauben eine dreidimensionale Vermessung des im Vorfeld des Gleitschalungsfertigers abgelegten Materials. Eine weitere Ausführungsform sieht vor, dass die Datenverarbeitungseinrichtung 16 derart konfiguriert ist, dass aus den Höhenprofil-Daten das Volumen des vor der Verteilereinrichtung 7 abgelegten Materials beschreibende Volumen-Daten bestimmt werden. Diese Volumen-Daten werden auf der Anzeigeeinrichtung 18 zur Anzeige gebracht. Beispielsweise wird für jeden Abschnitt getrennt das Materialvolumen berechnet und auf alphanumerischen Anzeigeelementen 19` werden die Volumina des Materials für jeden Abschnitt getrennt angezeigt. Eine andere Ausführungsform sieht vor, das Gesamtvolumen zu berechnen und mit der Anzeigeeinrichtung 18 anzuzeigen.

Die Datenverarbeitungseinrichtung 16 kann Bestandteil der zentralen Steuer- und Recheneinrichtung 21 des Gleitschalungsfertigers sein oder eine getrennte Einheit bilden, die mit der zentralen Steuer- und Recheneinrichtung 21 des Gleitschalungsfertigers zusammenwirkt. Das ermittelte Gesamtvolumen kann in der Datenverarbeitungseinrichtung 16 oder der Steuer- und Recheneinrichtung 21 einer weiteren Auswertung zugrunde gelegt werden. Auf der Grundlage der somit ermittelten Daten kann die Steuerung des Gleitschalungsfertigers erfolgen.

Eine Ausführungsform sieht vor, dass die Datenverarbeitungseinrichtung 16 derart konfiguriert ist, dass berechnet wird, ob das vorhandene Materialvolumen (Materialmenge) für eine bestimmte Zeitdauer ausreichend ist. Darüber hinaus oder als Alternative kann die Datenverarbeitungseinrichtung auch berechnen, welche Menge an Material für diese Zeitdauer noch abzulegen ist.

Eine weitere Ausführungsform sieht nicht eine manuelle Eingabe eines Soll-Wertes für die Höhe des abzulegenden Materials, sondern eine automatische Bestimmung der Soll-Höhe vor. Bei dieser Ausführungsform ist die Eingabeeinrichtung 17 derart ausgebildet, dass die Einbauhöhe und/oder der Einbaubreite und/oder der Einbaugeschwindigkeit und/oder die Materialeigenschaften des einzubauenden Materials eingegeben werden können. Die Datenverarbeitungseinrichtung 16 ist derart konfiguriert, dass auf der Grundlage der mit der Eingabeeinrichtung 17 eingegebenen Einbauhöhe und/oder der Einbaubreite und/oder der Einbaugeschwindigkeit und/oder der Materialeigenschaften des einzubauenden Materials die Soll-Höhe H_{SOLL} berechnet wird.

Nachfolgend wird ein weiterer Aspekt der Erfindung beschrieben, der von eigenständiger erfinderischer Bedeutung ist, d.h. die oben beschriebene Anzeige nicht voraussetzt und auch anstelle der Anzeige vorgesehen sein kann.

Die Verteilereinrichtung 7 des Gleitschalungsfertigers weist eine in Fig. 2 nur schematisch dargestellte Antriebseinrichtung 22 auf, die derart ausgebildet ist, dass das Verteilerelement 8 quer zur Arbeitsrichtung X auf der gesamten Arbeitsbreite bewegt werden kann und aus einer unteren Position angehoben und einer oberen Position abgesenkt werden kann. Anstelle nur eines Verteilerschwerts können auch mehrere Verteilerelemente 8 vorgesehen sein, die von der Antriebseinrichtung 22 in horizontaler und vertikaler Richtung, verfahren werden können. Die Antriebseinrichtung 22 erzeugt Positions-Daten, die die Position des Verteilerelements beschreiben. Die Positions-Daten können Koordinaten in einem kartesischen Koordinatensystem sein.

Zur Ansteuerung der Antriebseinrichtung 22 der Verteilereinrichtung 7 ist eine Steuereinrichtung 23 vorgesehen, die mit der Datenverarbeitungseinrichtung 16 zusammenwirkt. Die Steuereinrichtung 23, die Bestandteil der zentralen Steuer- und Recheneinrichtung 21 des Gleitschalungsfertigers sein kann, steuert die Antriebseinrichtung 22 der Verteilereinrichtung 7 derart an, dass Material aus einem Abschnitt, in dem die Höhe des Materials größer als die Soll-Höhe ist, in einen Abschnitt, in dem die Höhe des Materials kleiner als die Soll-Höhe ist, transportiert wird, so dass das Material auf der gesamten Arbeitsbreite des Fertiges verteilt wird.

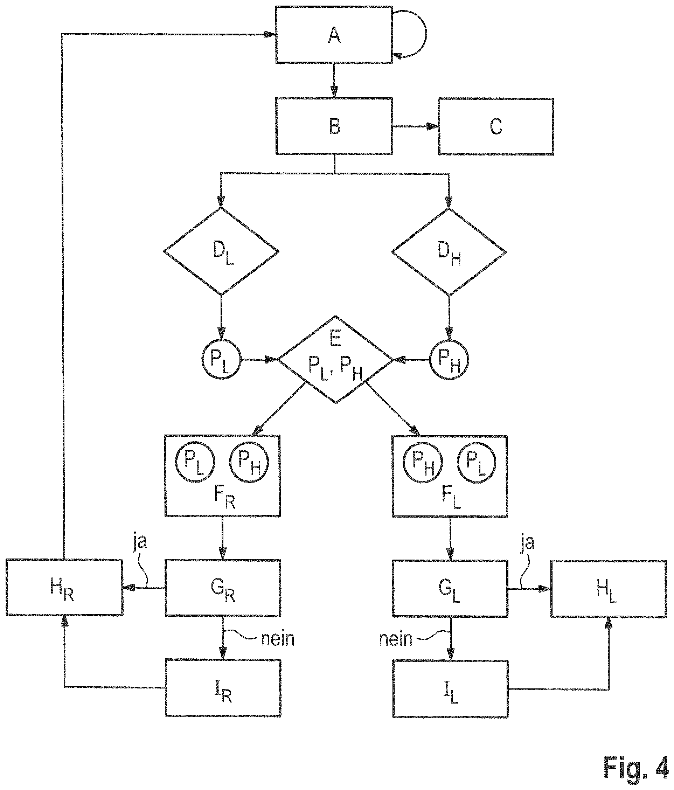

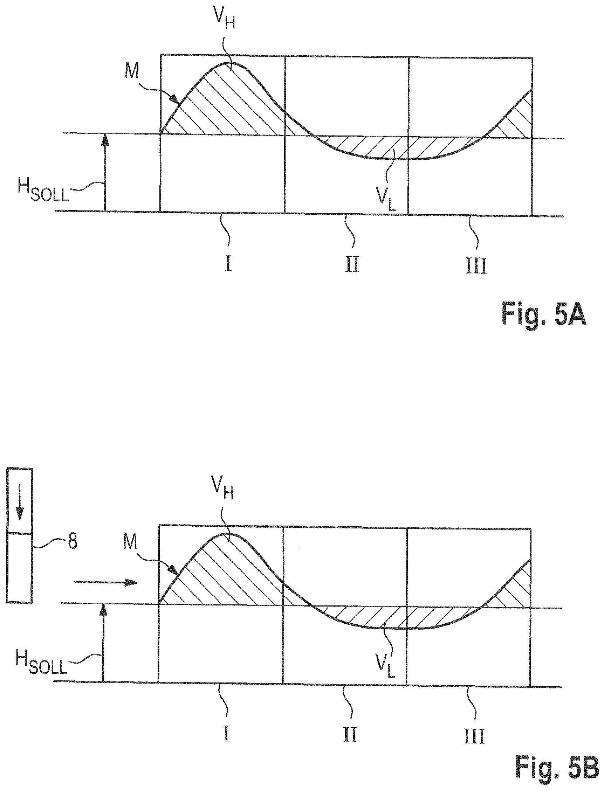

Nachfolgend werden unter Bezugnahme auf Fig. 4 und die Figuren 5A und 5B die einzelnen Schritte beschrieben, die von der Datenverarbeitungseinrichtung 16 und der Steuereinrichtung 23 durchgeführt werden, um das Verteilerelement 8 der Verteilereinrichtung 7 anzusteuern. Fig. 4 zeigt ein Ablaufdiagramm mit den einzelnen Verfahrensschritten und die Figuren 5A und 5B schematische Darstellungen der Materialanhäufungen in den einzelnen Abschnitten I, II, III im Vorfeld 14 der Verteilereinrichtung 7 zur Veranschaulichung der einzelnen Verfahrensschritte,

Die Datenverarbeitungseinrichtung 16, die die Höhenprofil-Daten der Vorfeld-Überwachungseinrichtung 13 und die Positions-Daten der Antriebeinrichtung 22 der Verteilereinrichtung 7 empfängt, überprüft fortlaufend, ob in jedem Abschnitt I, II, III ausreichend Material vorhanden ist, indem die tatsächliche Höhe H_{IST} jeder Materialanhäufung in einem Abschnitt I, II, III mit der Soll-Höhe H_{SOLL} verglichen wird. Wenn H_{IST} größer oder gleich als H_{SOLL} ist, wird angenommen, dass ausreichend Material vorhanden ist (Fig. 4: Schritt A). Fig. 5A zeigt den Fall, dass im Abschnitt X ausreichend und in den Abschnitten II und III nicht ausreichend Material vorhanden ist.

Wenn in einem Abschnitt nicht ausreichend Material vorhanden ist, wird das gesamte Volumen V_{H} des Materials im Vorfeld des Gleitschalungsfertigers bestimmt, das oberhalb der Soll-Höhe H_{SOLL} liegt, und das gesamte Volumen V_{L} des Materials bestimmt, das unterhalb der Soll-Höhe H_{SOLL} liegt. Wenn die Differenz zwischen V_{H} und V_{L} größer als ein vorgegebener Grenzwert ist, wird darauf geschlossen, dass ausreichend Material vorhanden ist (Schritt B). Eine exakte Bestimmung der Volumina auf der Grundlage der Höhenprofil-Daten ist nicht erforderlich. In der Praxis ist eine grobe Abschätzung der Volumina ausreichend. Wenn das Volumen nicht ausreichend ist, die Differzenz zwischen V_{H} und V_{L} also kleiner ist als ein vorgegebener Grenzwert, erfolgt eine entsprechende Anzeige oder wird ein entsprechendes Signal ausgegeben. Die Anzeige- und Signaleinrichtung 18 gibt beispielsweise einen akustischen oder optischen Alarm (Schritt C). Fig. 5A zeigt den Fall, dass V_{H} größer als V_{L} und das Gesamtvolumen für eine gleichmäßige Verteilung ausreichend ist.

Nunmehr wird bestimmt, in welchem Abschnitt P_{H} sich ein ausreichendes Volumen an Material befindet, d.h. ob die IST-Höhe H_{IST} größer als die SOLL-Höhe H_{SOLL} ist, und in welchem Abschnitt P_{L} sich ein nicht ausreichendes Volumen an Material befindet, d.h. ob die IST-Höhe H_{IST} kleiner oder gleich der SOLL-Höhe H_{SOLL} ist (Schritt D_{L} und Schritt D_{H}). Daraufhin wird die relative Lage der Abschnitte P_{L} bzw. P_{H} mit bzw. ohne ausreichendem Volumen an Material bestimmt (Schritt E). Es wird bestimmt, ob ein Abschnitt P_{H}, in dem die Höhe des Materials größer als die Soll-Höhe H_{SOLL} ist, d.h. das Volumen ausreichend ist, auf der linken Seite (Schritt F_{L}) oder rechten Seite (Schritt F_{R}) des Abschnitts P_{L} liegt, in dem die Höhe des Materials kleiner als die Soll-Höhe ist, d.h. das Volumen nicht ausreichend ist.

In den Figuren 5A und 5B entspricht der Abschnitt X dem Abschnitt P_{H}, in dem die Höhe des Material größer ist als die Soll-Höhe H_{SOLL} ist, und Abschnitt II entspricht dem Abschnitt P_{L}, in dem die Höhe des Materials kleiner als die Soll-Höhe H_{SOLL} ist.

Wenn der Abschnitt P_{H}, in dem die Höhe des Materials größer als die Soll-Höhe H_{SOLL} ist, auf der linken Seite des Abschnitts P_{L} liegt, in dem die Höhe des Materials kleiner als die Soll-Höhe ist (Schritt F_{L}), und sich das Verteilerelement 8 auf der linken Seite des Abschnitts P_{H} befindet, in dem die Höhe des Materials größer als die Soll-Höhe ist (Schritt G_{L}), senkt die Steuereinrichtung 23 das Verteilerelement 8 ab und bewegt das Verteilerelement 7 auf die rechte Seite des Abschnitts P_{L}, in dem die Höhe des Materials kleiner als die Soll-Höhe ist (Schritt H_{L}). In Fig. 5B ist die Bewegung des Verteilelements anhand von Pfeilen gezeigt.

Wenn der Abschnitt P_{H}, in dem die Höhe des Materials größer als die Soll-Höhe H_{SOLL} ist, auf der linken Seite des Abschnitts P_{L} liegt, in dem die Höhe des Materials kleiner als die Soll-Höhe ist (Schritt G_{L}), und sich das Verteilerelement 8 hingegen auf der rechten Seite des Abschnitts befindet, in dem die Höhe des Materials größer als die Soll-Höhe ist, bewegt die Steuereinrichtung 23 das Verteilerelement 8 zunächst in einem angehobenen Zustand auf die linke Seite des Abschnitts P_{H}, in dem die Höhe des Materials größer als die Soll-Höhe ist (Schritt I_{L}), d.h. in die in Fig. 5B gezeigte Position, senkt dann das Verteilerelement 8 ab und bewegt das Verteilerelement auf die rechte Seite des Abschnitts P_{L}, in dem die Höhe des Materials kleiner als die Soll-Höhe ist (Schritt HL) .

In analoger Weise erfolgt die Ansteuerung der Antriebseinrichtung 22 der Verteilereinrichtung 7, wenn sich der Abschnitt P_{H}, in dem die Höhe des Materials größer als die Soll-Höhe H_{SOLL} ist, auf der rechten Seite des Abschnitts P_{L} befindet, in dem die Höhe des Materials kleiner als die Soll-Höhe ist (Schritte F_{R}, G_{R}, H_{R}, I_{R}).

Wenn der Abschnitt P_{H}, in dem die Höhe des Materials größer als die Soll-Höhe H_{SOLL} ist, auf der rechten Seite des Abschnitts P_{L} liegt, in dem die Höhe des Materials kleiner als die Soll-Höhe ist (Schritt F_{R}), und sich das Verteilerelement 8 auf der rechten Seite des Abschnitts P_{H} befindet, in dem die Höhe des Materials größer als die Soll-Höhe ist (Schritt G_{R}), senkt die Steuereinrichtung 23 das Verteilerelement ab 8 und bewegt das Verteilerelement auf die linke Seite des Abschnitts P_{L}, in dem die Höhe des Materials kleiner als die Soll-Höhe ist (Schritt H_{R}).

Wenn der Abschnitt P_{H}, in dem die Höhe des Materials größer als die Soll-Höhe H_{SOLL} ist, auf der rechten Seite des Abschnitts P_{L} liegt, in dem die Höhe des Materials kleiner als die Soll-Höhe ist (Schritt F_{R}), und sich das Verteilerelement 8 hingegen auf der linken Seite des Abschnitts P_{H} befindet, in dem die Höhe des Materials größer als die Soll-Höhe ist (Schritt G_{R}), bewegt die Steuereinrichtung 23 das Verteilerelement 8 zunächst in einem angehobenen Zustand auf die rechte Seite des Abschnitts P_{H}, in dem die Höhe des Materials größer als die Soll-Höhe ist (Schritt I_{R}), senkt dann das Verteilerelement ab und bewegt das Verteilerelement auf die linke Seite des Abschnitts P_{L}, in dem die Höhe des Materials kleiner als die Soll-Höhe ist (Schritt H_{R}).

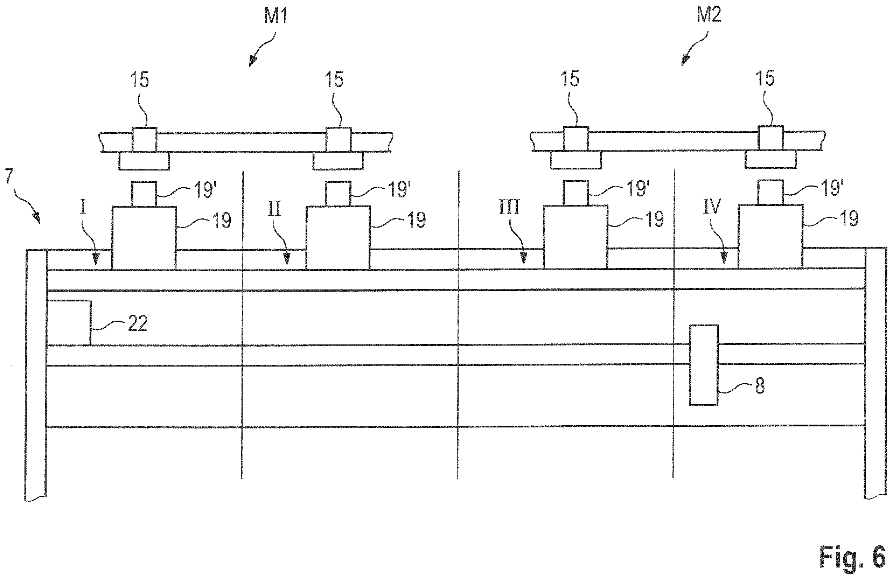

Fig. 6 zeigt eine aus mehreren modularen Einheiten M1, M2 bestehende Vorfeld-Überwachungseinrichtung 13. Bei dem vorliegenden Ausführungsbeispiel verfügt jede modulare Einheit M₁ bzw. M₂ über zwei Abstandssensoren oder Kamera-Systeme 15, die jeweils einem Abschnitt I, II, III, IV zugeordnet sind. Für die doppelte Arbeitsbreite werden zwei modulare Einheiten M1, M2 verwendet, die an dem Maschinenrahmen 1 nebeneinander angeordnet und mittels einer nicht dargestellten drahtgebundenen oder drahtlosen Verbindung miteinander verbunden sein kann, um die Daten zwischen den Einheiten übertragen zu können. Für die dreifache Arbeitsbreite beispielsweise werden drei modulare Einheiten verwendet. Die modularen Einheiten können mittels einer nicht dargestellten drahtgebundenen oder drahtlosen Verbindung mit der Datenverarbeitungseinrichtung 16 elektrisch verbunden sein, so dass die Daten übertragen werden können. Die modularen Einheiten können über eine gemeinsame Anzeige- oder Signaleinheit verfügen oder eigene Anzeige- oder Signaleiheiten aufweisen. Sämtliche modulare Einheiten können der Ansteuerung der Verteilereinrichtung dienen. Der modulare Aufbau erlaubt einen universellen Einsatz der Vorfeld-Überwachungseinrichtung 13.

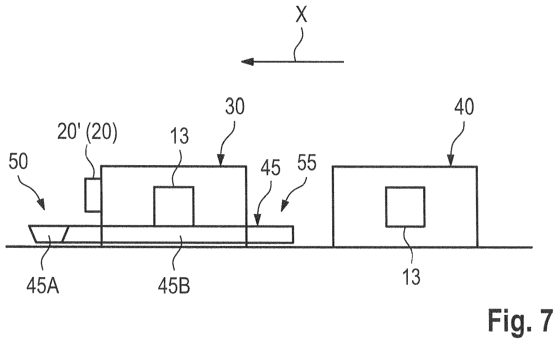

Nachfolgend wird unter Bezugnahme auf Fig. 7 ein Einbauzug für einen zweilagigen Betoneinbau beschrieben. Fig. 7 zeigt den Einbauzug in einer stark vereinfachten schematischen Darstellung. Der Einbauzug umfasst einen vorausfahrenden Unterbetonfertiger 30, der die untere Lage einbaut, und einen dem Unterbetonfertiger 30 nachfolgenden Oberbetonfertiger 40, der die obere Lage einbaut. Die Beschickung des Oberbetonfertigers 40 erfolgt im Vorfeld 50 des Unterbetonfertigers 30. Zur Beschickung des Oberbetonfertigers 40 ist in Arbeitsrichtung X vor dem Unterbetonfertiger 30 eine zusätzliche Aufgabestelle vorhanden. Hierzu ist eine Fördereinrichtung 45 vorgesehen, die eine Schütte 45A, in die das Material mit einem Bagger oder LKW abgelegt wird, und einen Bandförderer 45B aufweist, mit dem das Material entgegen der Arbeitsrichtung X in das Vorfeld 55 des Oberbetonfertigers 40 gefördert wird.

Zumindest der nachfolgende Gleitschalungsfertiger 40 (Oberbetonfertiger) ist ein Gleitschalungsfertiger, der über die unter Bezugnahme auf die Figuren 1 bis 6 beschriebene Vorfeld-Überwachungseinrichtung 13 verfügt. Bei dem Einbauzug weist die Anzeige- und Signaleinrichtung 18 (Figuren 1 bis 6) eine Anzeige- oder Signaleinheit 20' auf, die sich im Sichtfeld des Maschinenführers des Baggers oder Fahrers des LKW's, d.h. beispielsweise im Bereich der Vorderseite des Unterbetonfertigers 30 befindet. Die Anzeige- oder Signaleinheit 20' kann auch als eine mobile Anzeigeeinheit, beispielsweise im Fahrerstand des Baggers bzw. LKW's, ausgebildet sein. Wenn der Unterbetonfertiger 30 auch über eine Vorfeld-Überwachungseinrichtung 13 verfügt, kann die Anzeige- oder Signaleinheit 20' die Anzeige- oder Signaleinheit 20 der Vorfeld-Überwachungseinrichtung 13 des Unterbetonfertigers 30 sein.

Die Vorfeld-Überwachungseinrichtung 13 des Oberbetonfertigers 40 überwacht fortlaufend das Volumen des im Vorfeld 55 befindlichen Materials. Die Vorfeld-Überwachungseinrichtung 13 ist derart konfiguriert, dass aus den Höhenprofil-Daten oder -Signalen das Volumen des vor der Verteilereinrichtung 7 des Oberbetonfertigers 40 abgelegten Materials beschreibende Volumen-Daten bestimmt werden. Diese Volumen-Daten werden dann in der Daten- oder Signalverarbeitungseinrichtung 16 einer weiteren Daten- oder Signalverarbeitung unterzogen, um festzustellen, ob eine ausreichende Menge an Material vorhanden ist. Wenn das Volumen nicht ausreichen sollte, wird dies mittels der Anzeige- oder Signaleinheit 20' angezeigt, was der Fahrer des LKW leicht erkennen kann, oder mittels der Anzeige- oder Signaleinheit 20' wird ein Signal ausgegeben. Alternativ oder zusätzlich kann auch ein Eingriff in die Maschinensteuerung des Oberbetonfertigers 40 und/oder Unterbetonfertigers 30 vorgenommen werden.

## Patentansprüche

1. Fertiger, insbesondere Gleitschalungsfertiger, mit einem von Laufwerken (2, 3) getragenen Maschinenrahmen (1) und einer Einbaueinrichtung (6) zum Einbau von Material,
**dadurch gekennzeichnet, dass** der Fertiger aufweist,
eine Vorfeld-Überwachungseinrichtung (13), die derart konfiguriert ist, dass Höhenprofil-Daten oder -Signale erzeugt werden, die das Höhenprofil des im Vorfeld (14) der Einbaueinrichtung (6) abgelegten Materials (M) in einer quer zur Arbeitsrichtung (X) verlaufenden Richtung beschreiben, und
eine die Höhenprofil-Daten oder -Signale empfangende Daten- oder Signalverarbeitungseinrichtung (16) zur Verarbeitung der Höhenprofil-Daten oder - Signale.

2. Fertiger nach Anspruch 1, **dadurch gekennzeichnet, dass** eine Verteilereinrichtung (7) zum Verteilen des einzubauenden Materials in einer quer zur Arbeitsrichtung (X) verlaufenden Richtung vorgesehen ist, wobei die Verteilereinrichtung (7) in Arbeitsrichtung (X) vor der Einbaueinrichtung (6) angeordnet ist, und die Vorfeld-Überwachungseinrichtung derart konfiguriert ist, dass Höhenprofil-Daten oder - Signale erzeugt werden, die das Höhenprofil des vor der Verteilereinrichtung (7) abgelegten Materials beschreiben.

3. Fertiger nach Anspruch 1 oder 2, **dadurch gekennzeichnet, dass** die Daten- oder Signalverarbeitungseinrichtung (16) derart konfiguriert ist, dass aus den Höhenprofil-Daten oder -Signalen das Volumen des vor der Einbaueinrichtung (6) abgelegten Materials (M) beschreibende Volumen-Daten bestimmt werden.

4. Fertiger nach einem der Ansprüche 1 bis 3, **dadurch gekennzeichnet, dass** die Daten- oder Signalverarbeitungseinrichtung (16) derart konfiguriert ist, dass aus den Höhenprofil-Daten oder -Signalen und eine vorgegebene Soll-Höhe (H_{SOLL}) beschreibenden Daten Abschnitte (I, II, III) des Höhenprofils ermittelt werden, in denen die Höhe des Materials gleich oder größer als die Soll-Höhe (H_{SOLL}) ist, und/oder Abschnitte (I, II, III) des Höhenprofils ermittelt werden, in denen die Höhe des Materials kleiner als die Soll-Höhe ist.

5. Fertiger nach Anspruch 4, **dadurch gekennzeichnet, dass** der Fertiger eine Eingabeeinrichtung (17) aufweist, wobei die Daten- oder Signalverarbeitungseinrichtung (16) derart konfiguriert ist, dass auf der Grundlage der mit der Eingabeeinrichtung (17) eingegebenen Einbauhöhe und/oder der Einbaubreite und/oder der Einbaugeschwindigkeit und/oder der Materialeigenschaften des einzubauenden Materials (M) die die vorgegebene Soll-Höhe (H_{SOLL}) beschreibenden Daten bestimmt werden.

6. Fertiger nach einem der Ansprüche 1 bis 5, **dadurch gekennzeichnet, dass** eine mit der Daten- oder Signalverarbeitungseinrichtung (16) zusammenwirkende Anzeige- und/oder Signaleinrichtung (18) vorgesehen ist, die derart konfiguriert ist, dass für das Höhenprofil charakteristische Symbole (19A, 19B) und/oder Signale angezeigt bzw. ausgegeben werden.

7. Fertiger nach Anspruch 4, soweit Anspruch 4 von Anspruch 2 abhängig ist,
**dadurch gekennzeichnet, dass** eine mit der Daten- oder Signalverarbeitungseinrichtung (16) zusammenwirkende Steuereinrichtung (23) vorgesehen ist, die derart konfiguriert ist, dass die Verteilereinrichtung (7) derart angesteuert wird, dass Material (M) aus einem Abschnitt (I), in dem die Höhe des Materials größer als die Soll-Höhe (H_{SOLL}) ist, in einen Abschnitt (II, III), in dem die Höhe des Materials kleiner als die Soll-Höhe ist, transportiert wird,

8. Fertiger nach Anspruch 2, **dadurch gekennzeichnet, dass** die Verteilereinrichtung (7) ein quer zur Arbeitsrichtung (X) bewegbares Verteilerelement (8) aufweist, das aus einer unteren Position in eine obere Position angehoben und aus einer oberen Position in eine untere Position abgesenkt werden kann, und die Verteilereinrichtung (7) die Position des Verteilerelementes beschreibende Positions-Daten erzeugt.

9. Fertiger nach Anspruch 8, **dadurch gekennzeichnet, dass** die Daten- oder Signalverarbeitungseinrichtung (16) derart konfiguriert ist, dass bestimmt wird, ob ein Abschnitt (I), in dem die Höhe des Materials (M) größer als die Soll-Höhe (H_{SOLL}) ist, auf der linken oder rechten Seite eines Abschnitts (II) liegt, in dem die Höhe des Materials kleiner als die Soll-Höhe (H_{SOLL}) ist, und
wenn der Abschnitt, in dem die Höhe des Materials größer als die Soll-Höhe (H_{SOLL}) ist, auf der linken Seite des Abschnitts liegt, in dem die Höhe des Materials kleiner als die Soll-Höhe (H_{SOLL}) ist, und sich das Verteilerelement (8) auf der linken Seite des Abschnitts befindet, in dem die Höhe des Materials größer als die Soll-Höhe (H_{SOLL}) ist,
die Steuereinrichtung (23) derart konfiguriert ist, dass das Verteilerelement (8) absenkt und auf die rechte Seite des Abschnitts, in dem die Höhe des Materials kleiner als die Soll-Höhe (H_{SOLL}) ist, bewegt wird, und
wenn der Abschnitt, in dem die Höhe des Materials größer als die Soll-Höhe (H_{SOLL}) ist, auf der linken Seite des Abschnitts liegt, in dem die Höhe des Materials kleiner als die Soll-Höhe ist (H_{SOLL}), und sich das Verteilerelement (8) auf der rechten Seite des Abschnitts befindet, in dem die Höhe des Materials größer als die Soll-Höhe (H_{SOLL}) ist,
die Steuereinrichtung (23) derart konfiguriert ist, dass das Verteilerelement (8) zunächst auf die linke Seite des Abschnitts, in dem die Höhe des Materials größer als die Soll-Höhe (H_{SOLL}) ist, bewegt wird und dann das Verteilerelement absenkt und auf die rechte Seite des Abschnitts, in dem die Höhe des Materials kleiner als die Soll-Höhe (H_{SOLL}) ist, bewegt wird, oder
wenn der Abschnitt, in dem die Höhe des Materials größer als die Soll-Höhe (H_{SOLL}) ist, auf der rechten Seite des Abschnitts liegt, in dem die Höhe des Materials kleiner als die Soll-Höhe (H_{SOLL}) ist, und sich das Verteilerelement (8) auf der rechten Seite des Abschnitts befindet, in dem die Höhe des Materials größer als die Soll-Höhe ist,
die Steuereinrichtung (23) derart konfiguriert ist, dass das Verteilerelement (8) absenkt und auf die linke Seite des Abschnitts, in dem die Höhe des Materials kleiner als die Soll-Höhe (H_{SOLL}) ist, bewegt wird, und
wenn der Abschnitt, in dem die Höhe des Materials größer als die Soll-Höhe (H_{SOLL}) ist, auf der rechten Seite des Abschnitts liegt, in dem die Höhe des Materials kleiner als die Soll-Höhe (H_{SOLL}) ist, und sich das Verteilerelement (8) auf der linken Seite des Abschnitts befindet, in dem die Höhe des Materials größer als die Soll-Höhe (H_{SOLL}) ist,
die Steuereinrichtung (7) derart konfiguriert ist, dass das Verteilerelement (8) zunächst auf die rechte Seite des Abschnitts, in dem die Höhe des Materials größer als die Soll-Höhe (H_{SOLL}) ist, bewegt wird und dann das Verteilerelement absenkt und auf die linke Seite des Abschnitts, in dem die Höhe des Materials kleiner als die Soll-Höhe (H_{SOLL}) ist, bewegt wird.

10. Fertiger nach einem der Ansprüche 1 bis 9, **dadurch gekennzeichnet, dass** die Vorfeld-Überwachungseinrichtung (13) ein Abstandsmesssystem aufweist, das derart konfiguriert sind, dass der Abstand mindestens eines auf den Maschinenrahmen (1) bezogenen Referenzpunktes zu der Oberfläche des Materials (M) gemessen wird.

11. Fertiger nach einem der Ansprüche 1 bis 10, **dadurch gekennzeichnet, dass** die Vorfeld-Überwachungseinrichtung (13) mehrere modulare Einheiten (M1, M2) umfasst, die jeweils einen Abstandssensor oder mehrere quer zur Arbeitsrichtung verteilt angeordnete Abstandssensoren (15) oder jeweils ein Kamera-System oder mehrere quer zur Arbeitsrichtung verteilt angeordnete Kamera-Systeme (15) aufweisen.

12. Verfahren zum Betreiben eines Fertiger, insbesondere Gleitschalungsfertigers, der eine von Laufwerken (2, 3) getragenen Maschinenrahmen (1), eine Einbaueinrichtung (6) zum Einbau von Material und eine Verteilereinrichtung (7) zum Verteilen des einzubauenden Materials in einer quer zur Arbeitsrichtung (X) verlaufenden Richtung aufweist, wobei die Verteilereinrichtung (7) in Arbeitsrichtung vor der Einbaueinrichtung (6) angeordnet ist,
**dadurch gekennzeichnet, dass** mit einer Vorfeld-Überwachungseinrichtung (13) Höhenprofil-Daten oder -Signale erzeugt werden, die das Höhenprofil des im Vorfeld (14) der Verteilereinrichtung (7) abgelegten Materials (M) in einer quer zur Arbeitsrichtung (X) verlaufenden Richtung beschreiben, und
die Höhenprofil-Daten oder -Signale mit einer die Höhenprofil-Daten oder -Signale empfangenden Daten- oder Signalverarbeitungseinrichtung (16) verarbeitet werden.

13. Verfahren nach Anspruch 12, **dadurch gekennzeichnet, dass** mit der Daten- oder Signalverarbeitungseinrichtung (16) aus den Höhenprofil-Daten oder -Signalen und eine vorgegebene Soll-Höhe (H_{SOLL}) beschreibenden Daten Abschnitte (I, II, III) des Höhenprofils ermittelt werden, in denen die Höhe des Materials gleich oder größer als die Soll-Höhe (H_{SOLL}) ist, und/oder Abschnitte des Höhenprofils ermittelt werden, in denen die Höhe des Materials kleiner als die Soll-Höhe (H_{SOLL}) ist.

14. Verfahren nach Anspruch 13, **dadurch gekennzeichnet, dass** mit der Daten- oder Signalverarbeitungseinrichtung (16) auf der Grundlage der Einbauhöhe und/oder der Einbaubreite und/oder der Einbaugeschwindigkeit und/oder der Materialeigenschaften des einzubauenden Materials (M) die die vorgegebene Soll-Höhe (H_{SOLL}) beschreibenden Daten bestimmt werden.

15. Verfahren nach einem der Ansprüche 12 bis 14, **dadurch gekennzeichnet, dass** mit der Verteilereinrichtung (7) Material (M) aus einem Abschnitt (I), in dem die Höhe des Materials größer als die Soll-Höhe (H_{SOLL}) ist, in einen Abschnitt (II), in dem die Höhe des Materials kleiner als die Soll-Höhe (H_{SOLL}) ist, transportiert wird, so dass das Material über die Arbeitsbreite des Fertiges verteilt wird.

## Claims

1. Paver, in particular slipform paver, having a machine frame (1) supported by undercarriages (2, 3) and a paving device (6) for the paving of material,
**characterised in that** the paver has:
an apron monitoring device (13) which is configured in such a way that elevation profile data or elevation profile signals are generated, which describe the elevation profile of the material (M) deposited in the apron (14) of the paving device (6) in a direction running transversely to the working direction (X), and
a data or signal processing device (16) which receives the elevation profile data or signals for processing the elevation profile data or signals.

2. Paver according to claim 1, **characterised in that** a spreading device (7) is provided for spreading the material to be paved in a direction running transversely to the working direction (X), the spreading device (7) being arranged in the working direction (X) in front of the paving device (6), and the apron monitoring device being configured in such a way that the elevation profile data or elevation profile signals are generated, which describe the elevation profile of the material deposited in front of the spreading device (7).

3. Paver according to either claim 1 or claim 2, **characterised in that** the data or signal processing device (16) is configured in such a way that volume data describing the volume of the material (M) deposited in front of the paving device (6) are determined from the elevation profile data or elevation profile signals.

4. Paver according to any of claims 1 to 3, **characterised in that** the data or signal processing device (16) is configured in such a way that portions (I, II, III) of the elevation profile in which the elevation of the material is equal to or greater than the nominal elevation (H_{NOMINAL}), and/or portions (I, II, III) of the elevation profile in which the elevation of the material is less than the nominal elevation, are determined from the elevation profile data or signals and data describing a predetermined nominal elevation (H_{NOMINAL}).

5. Paver according to claim 4, **characterised in that** the paver has an input device (17), wherein the data or signal processing device (16) is configured in such a way that the data describing the predetermined nominal elevation (H_{NOMINAL}) are determined on the basis of the paving elevation and/or the paving width and/or the paving speed and/or the material properties of the material (M) to be paved, which are entered using the input device (17).

6. Paver according to any of claims 1 to 5, **characterised in that** a display and/or signalling device (18) is provided which cooperates with the data or signal processing device (16) and is configured in such a way that symbols (19A, 19B) and/or signals characteristic of the elevation profile are displayed or output.

7. Paver according to claim 4, as far as claim 4 is dependent of claim 2, **characterised in that** a control device (23) cooperating with the data or signal processing device (16) is provided, which is configured in such a way that the spreading device (7) is controlled in such a way that material (M) is transported from a portion (I), in which the elevation of the material is greater than the nominal elevation (H_{NOMINAL}), into a portion (II, III), in which the elevation of the material is less than the nominal elevation.

8. Paver according to claim 2, **characterised in that** the spreading device (7) comprises a spreading member (8) movable transversely to the working direction (X), which can be raised from a lower position into an upper position and lowered from an upper position into a lower position, and the spreading device (7) generates position data describing the position of the spreading member.

9. Paver according to claim 8, **characterised in that** the data or signal processing device (16) is configured to determine whether a portion (I) in which the elevation of the material (M) is greater than the nominal elevation (H_{NOMINAL}) lies on the left or right side of a portion (II) in which the elevation of the material is less than the nominal elevation (H_{NOMINAL}), and
when the portion in which the elevation of the material is greater than the nominal elevation (H_{NOMINAL}) lies on the left side of the portion in which the elevation of the material is less than the nominal elevation (H_{NOMINAL}) and the spreading member (8) is on the left side of the portion in which the elevation of the material is greater than the nominal elevation (H_{NOMINAL}),
the control device (23) is configured in such a way that the spreading member (8) is lowered and moved to the right side of the portion in which the elevation of the material is less than the nominal elevation (H_{NOMINAL}), and
when the portion in which the elevation of the material is greater than the nominal elevation (H_{NOMINAL}) is on the left side of the portion in which the elevation of the material is less than the nominal elevation (H_{NOMINAL}), and the spreading member (8) is located on the right side of the portion in which the elevation of the material is greater than the nominal elevation (H_{NOMINAL}),
the control device (23) is configured in such a way that the spreading member (8) is first directed to the left side of the portion in which the elevation of the material is greater than the nominal elevation (H_{NOMINAL}), and then the spreading member is lowered and moved to the right side of the portion in which the elevation of the material is less than the nominal elevation (H_{NOMINAL}), or
when the portion in which the elevation of the material is greater than the nominal elevation (H_{NOMINAL}) is on the right side of the portion in which the elevation of the material is less than the nominal elevation (H_{NOMINAL}), and the spreading member (8) is located on the right side of the portion in which the elevation of the material is greater than the nominal elevation,
the control device (23) is configured in such a way that the spreading member (8) is lowered and moved to the left side of the portion in which the elevation of the material is less than the nominal elevation (H_{NOMINAL}), and
when the portion in which the elevation of the material is greater than the nominal elevation (H_{NOMINAL}) is on the right side of the portion in which the elevation of the material is less than the nominal elevation (H_{NOMINAL}) and the spreading member (8) is on the left side of the portion in which the elevation of the material is greater than the nominal elevation (H_{NOMINAL}),
the control device (23) is configured in such a way that the spreading member (8) is first moved to the right side of the portion in which the elevation of the material is greater than the nominal elevation (H_{NOMINAL}) and then the spreading member is lowered and moved to the left side of the portion in which the elevation of the material is less than the nominal elevation (H_{NOMINAL}).

10. Paver according to any of claims 1 to 9, **characterised in that** the apron monitoring device (13) has a distance measuring system configured in such a way that the distance is measured between at least one reference point related to the machine frame (1) and the surface of the material (M).

11. Paver according to any of claims 1 to 10, **characterised in that** the apron monitoring device (13) comprises a plurality of modular units (M1, M2), each having one or a plurality of distance sensors distributed across the working direction or one or a plurality of camera systems (15) distributed across the working direction.

12. Method for operating a paver, in particular a slipform paver, which has a machine frame (1) supported by undercarriages (2, 3), a paving device (6) for the paving of material and a spreading device (7) for spreading the material to be paved in a direction running transversely to the working direction (X), the spreading device (7) being arranged upstream of the paving device (6) in the working direction,
**characterised in that** by means of an apron monitoring device (13), elevation profile data or signals are generated, which describe the elevation profile of the material (M) deposited in the apron (14) of the spreading device (7) in a direction running transversely to the working direction (X), and
the elevation profile data or signals are processed with a data or signal processing device (16) receiving the elevation profile data or signals.

13. Method according to claim 12, **characterised in that** portions (I, II, III) of the elevation profile, in which the elevation of the material is equal to or greater than the nominal elevation (H_{NOMINAL}), and/or portions of the elevation profile, in which the elevation of the material is less than the nominal elevation (H_{NOMINAL}), are determined using the data or signal processing device (16) from the elevation profile data or signals and data describing a predetermined nominal elevation (H_{NOMINAL}).

14. Method according to claim 13, **characterised in that** the data describing the predetermined nominal elevation (H_{NOMINAL}) are determined using the data or signal processing device (16) on the basis of the paving elevation and/or the paving width and/or the paving speed and/or the material properties of the material (M) to be paved.

15. Method according to any of claims 12 to 14, **characterised in that** the material (M) is transported by the spreading device (7) from a portion (I), in which the elevation of the material is greater than the nominal elevation (H_{NOMINAL}), to a portion (II), in which the elevation of the material is less than the nominal elevation (H_{NOMINAL}), so that the material is spread over the working width of the paver.

## Revendications

1. Finisseur, en particulier finisseur à coffrage glissant, avec un bâti de machine (1) supporté par des mécanismes de roulement (2, 3) et un système de montage (6) pour le montage de matériau,
**caractérisé en ce que** le finisseur présente :
un système de surveillance de champ proche à l'avant (13) qui est configuré de telle manière que sont produites des données ou des signaux de profil de hauteur qui décrivent le profil de hauteur du matériau (M) déposé dans le champ proche à l'avant (14) du système de montage (6) dans une direction s'étendant de manière transversale par rapport à la direction de travail (X), et
un système de traitement de données ou de signaux (16) recevant les données ou signaux de profil de hauteur pour traiter les données ou signaux de profil de hauteur.

2. Finisseur selon la revendication 1, **caractérisé en ce qu'**un système de répartition (7) est prévu pour répartir le matériau devant être monté dans une direction s'étendant de manière transversale par rapport à la direction de travail (X), dans lequel le système de répartition (7) est disposé devant le système de montage (6) dans la direction de travail (X), et le système de surveillance de champ proche à l'avant est configuré de telle manière que sont produits des données ou des signaux de profil de hauteur qui décrivent le profil de hauteur du matériau déposé devant le système de répartition (7).

3. Finisseur selon la revendication 1 ou 2, **caractérisé en ce que** le système de traitement de données ou de signaux (16) est configuré de telle manière que des données de volume décrivant le volume du matériau (M) déposé devant le système de montage (6) sont définies à partir des données ou des signaux de profil de hauteur.

4. Finisseur selon l'une quelconque des revendications 1 à 3, **caractérisé en ce que** le système de traitement de données ou de signaux (16) est configuré de telle manière que sont déterminées, à partir des données ou signaux de profil de hauteur et de données décrivant une hauteur cible (H_{CIBLE}) spécifiée, des sections (I, II, III) du profil de hauteur dans lesquelles la hauteur du matériau est supérieure ou égale à la hauteur cible (H_{CIBLE}), et/ou sont déterminées des sections (I, II, III) du profil de hauteur dans lesquelles la hauteur du matériau est inférieure à la hauteur cible.

5. Finisseur selon la revendication 4, **caractérisé en ce que** le finisseur présente un système de saisie (17), dans lequel le système de traitement de données ou de signaux (16) est configuré de telle manière que les données décrivant la hauteur cible (H_{CIBLE}) spécifiée sont déterminées sur la base de la hauteur de montage saisie avec le système de saisie (17) et/ou de la largeur de montage et/ou de la vitesse de montage et/ou des propriétés de matériau du matériau (M) devant être monté.

6. Finisseur selon l'une quelconque des revendications 1 à 5, **caractérisé en ce qu'**est prévu un système d'affichage et/ou de signaux (18) coopérant avec le système de traitement de données ou de signaux (16) qui est configuré de telle manière que sont affichés ou édités des symboles (19A, 19B) et/ou des signaux caractéristiques du profil de hauteur.

7. Finisseur selon la revendication 4, dans la mesure où la revendication 4 dépend de la revendication 2,
**caractérisé en ce qu'**est prévu un système de commande (23) coopérant avec le système de traitement de données ou de signaux (16) qui est configuré de telle manière que le système de répartition (7) est piloté de telle manière que du matériau (M) est transporté d'une section (I) dans laquelle la hauteur du matériau est supérieure à la hauteur cible (H_{CIBLE}), à une section (II, III) dans laquelle la hauteur du matériau est inférieure à la hauteur cible.

8. Finisseur selon la revendication 2, **caractérisé en ce que** le système de répartition (7) présente un élément de répartition (8) pouvant être déplacé de manière transversale par rapport à la direction de travail (X) qui est relevé depuis une position inférieure dans une position supérieure et peut être abaissé depuis une position supérieure dans une position inférieure, et le système de répartition (7) produit des données de position décrivant la position de l'élément de répartition.

9. Finisseur selon la revendication 8, **caractérisé en ce que** le système de traitement de données ou de signaux (16) est configuré de telle manière qu'il est défini si une section (I) dans laquelle la hauteur du matériau (M) est supérieure à la hauteur cible (H_{CIBLE}) se situe sur le côté gauche ou droit d'une section (II) dans laquelle la hauteur du matériau est inférieure à la hauteur cible (H_{CIBLE}), et
lorsque la section dans laquelle la hauteur du matériau est supérieure à la hauteur cible (H_{CIBLE}) se situe sur le côté gauche de la section dans laquelle la hauteur du matériau est inférieure à la hauteur cible (H_{CIBLE}) et l'élément de répartition (8) se trouve sur le côté gauche de la section dans laquelle la hauteur du matériau est supérieure à la hauteur cible (H_{CIBLE}),
le système de commande (23) est configuré de telle manière que l'élément de répartition (8) est abaissé et est déplacé sur le côté droit de la section dans laquelle la hauteur du matériau est inférieure à la hauteur cible (H_{CIBLE}), et
lorsque la section dans laquelle la hauteur du matériau est supérieure à la hauteur cible (H_{CIBLE}) se situe sur le côté gauche de la section dans laquelle la hauteur du matériau est inférieure à la hauteur cible (H_{CIBLE}) et que l'élément de répartition (8) se trouve sur le côté droit de la section dans laquelle la hauteur du matériau est supérieure à la hauteur cible (H_{CIBLE}),
le système de commande (23) est configuré de telle manière que l'élément de répartition (8) est déplacé dans un premier temps sur le côté gauche de la section dans laquelle la hauteur du matériau est supérieure à la hauteur cible (H_{CIBLE}), puis l'élément de répartition est abaissé et est déplacé sur le côté droit de la section dans laquelle la hauteur du matériau est inférieure à la hauteur cible (H_{CIBLE}), ou
lorsque la section dans laquelle la hauteur du matériau est supérieure à la hauteur cible (H_{CIBLE}) se situe sur le côté droit de la section dans laquelle la hauteur du matériau est inférieure à la hauteur cible (H_{CIBLE}) et l'élément de répartition (8) se trouve sur le côté droit de la section dans laquelle la hauteur du matériau est supérieure à la hauteur cible,
le système de commande (23) est configuré de telle manière que l'élément de répartition (8) est abaissé et est déplacé sur le côté gauche de la section dans laquelle la hauteur du matériau est inférieure à la hauteur cible (H_{CIBLE}), et
lorsque la section dans laquelle la hauteur du matériau est supérieure à la hauteur cible (H_{CIBLE}) se situe sur le côté droit de la section dans laquelle la hauteur du matériau est inférieure à la hauteur cible (H_{CIBLE}) et l'élément de répartition (8) se trouve sur le côté gauche de la section dans laquelle la hauteur du matériau est supérieure à la hauteur cible (H_{CIBLE}),
le système de commande (7) est configuré de telle manière que l'élément de répartition (8) est déplacé dans un premier temps sur le côté droit de la section dans laquelle la hauteur du matériau est supérieure à la hauteur cible (H_{CIBLE}) puis l'élément de répartition est abaissé et est déplacé sur le côté gauche de la section dans laquelle la hauteur du matériau est inférieure à la hauteur cible (H_{CIBLE}).

10. Finisseur selon l'une quelconque des revendications 1 à 9, **caractérisé en ce que** le système de surveillance de champ proche à l'avant (13) présente un système de mesure de distance qui est configuré de telle manière que la distance d'au moins un point de référence se rapportant au bâti de machine (1) par rapport à la surface du matériau (M) est mesurée.

11. Finisseur selon l'une quelconque des revendications 1 à 10, **caractérisé en ce que** le système de surveillance de champ proche à l'avant (13) comprend plusieurs unités modulaires (M1, M2) qui présentent respectivement un capteur de distance ou plusieurs capteurs de distance (15) disposés de manière répartie transversalement par rapport à la direction de travail ou respectivement un système de caméra ou plusieurs systèmes de caméra (15) disposés de manière répartie transversalement par rapport à la direction de travail.

12. Procédé pour faire fonctionner un finisseur, en particulier un finisseur à coffrage glissant, qui présente un bâti de machine (1) supporté par des mécanismes de roulement (2, 3), un système de montage (6) pour le montage de matériau et un système de répartition (7) pour répartir le matériau devant être monté dans une direction s'étendant de manière transversale par rapport à la direction de travail (X), dans lequel le système de répartition (7) est disposé dans la direction de travail devant le système de montage (6),
**caractérisé en ce que** sont produits avec un système de surveillance de champ proche à l'avant (13) des données ou des signaux de profil de hauteur qui décrivent le profil de hauteur du matériau (M) déposé dans le champ proche à l'avant (14) du système de répartition (7) dans une direction s'étendant de manière transversale par rapport à la direction de travail (X), et
les données ou signaux de profil de hauteur sont traités avec un système de traitement de données ou de signaux (16) recevant les données ou signaux de profil de hauteur.

13. Procédé selon la revendication 12, **caractérisé en ce que** sont déterminées avec le système de traitement de données ou de signaux (16), à partir des données ou signaux de profil de hauteur et de données décrivant une hauteur cible (H_{CIBLE}) spécifiée, des sections (I, II, III) du profil de hauteur dans lesquelles la hauteur du matériau est supérieure ou égale à la hauteur cible (H_{CIBLE}), et/ou sont déterminées des sections du profil de hauteur dans lesquelles la hauteur du matériau est inférieure à la hauteur cible (H_{CIBLE}).

14. Procédé selon la revendication 13, **caractérisé en ce que** les données décrivant la hauteur cible (H_{CIBLE}) spécifiée sont définies avec le système de traitement de données ou de signaux (16) sur la base de la hauteur de montage et/ou de la largeur de montage et/ou de la vitesse de montage et/ou des propriétés de matériau du matériau (M) devant être monté.

15. Procédé selon l'une quelconque des revendications 12 à 14, **caractérisé en ce que** du matériau (M) est transporté, depuis une section (I) dans laquelle la hauteur du matériau est supérieure à la hauteur cible (H_{CIBLE}) vers une section (II) dans laquelle la hauteur du matériau est inférieure à la hauteur cible (H_{CIBLE}), avec le système de répartition (7) de sorte que le matériau est réparti sur la largeur de travail du finisseur.
